(19) Europäisches Patentamt / European Patent Office / Office européen des brevets

(11) **EP 4 548 999 A1**

(12) **EUROPEAN PATENT APPLICATION**
published in accordance with Art. 153(4) EPC


(43) Date of publication:
**07.05.2025 Bulletin 2025/19**

(21) Application number: **23852278.3**

(22) Date of filing: **05.07.2023**

(51) International Patent Classification (IPC):
***B01D 53/14*** *(2006.01)* ***B01D 53/62*** *(2006.01)*
***B01D 53/78*** *(2006.01)*

(52) Cooperative Patent Classification (CPC):
**B01D 53/14; B01D 53/62; B01D 53/78;** Y02C 20/40

(86) International application number:
**PCT/JP2023/025013**

(87) International publication number:
**WO 2024/034295 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 JP 2022127183**



(71) Applicants:
- **KABUSHIKI KAISHA KOBE SEIKO SHO (KOBE STEEL, LTD.)**
  **Hyogo 651-8585 (JP)**
- **NATIONAL UNIVERSITY CORPORATION TOKAI NATIONAL**
  **HIGHER EDUCATION AND RESEARCH SYSTEM**
  **Nagoya-shi, Aichi 464-8601 (JP)**

(72) Inventors:
- **MAEDA, Norihide**
  **Kobe-shi, Hyogo 651-2271 (JP)**
- **KISHIMOTO, Akira**
  **Kobe-shi, Hyogo 651-2271 (JP)**
- **YOSHIZAWA, Mai**
  **Kobe-shi, Hyogo 651-2271 (JP)**
- **MACHIDA, Hiroshi**
  **Nagoya-shi, Aichi 464-8601 (JP)**
- **YAMAGUCHI, Tsuyoshi**
  **Nagoya-shi, Aichi 464-8601 (JP)**
- **NORINAGA, Koyo**
  **Nagoya-shi, Aichi 464-8601 (JP)**

(74) Representative: **TBK**
**Bavariaring 4-6**
**80336 München (DE)**


(54) **GAS TREATMENT APPARATUS AND GAS TREATMENT METHOD**


(57) This gas treatment apparatus includes: an absorber that brings a treatment liquid and a gas to be treated containing an acidic compound into contact with one another and causes the treatment liquid to absorb the acidic compound contained in the gas to be treated; a plurality of regenerators that heat the treatment liquid, which has absorbed the acidic compound, using heat from a heat source fluid and separate the acidic compound from the treatment liquid; and introduction means that introduces a separation promoting gas into the regenerators, the separation promoting gas promoting separation of the acidic compound from the treatment liquid. The plurality of regenerators are respectively provided with heaters that heat the treatment liquid by heat of the heat source fluid, and the heaters are connected in series so that the heat source fluid sequentially flows through the heaters. The introduction means introduces a larger amount of the separation promoting gas into a regenerator provided with a heater located farther downstream in a flow direction of the heat source fluid.


FIG.1

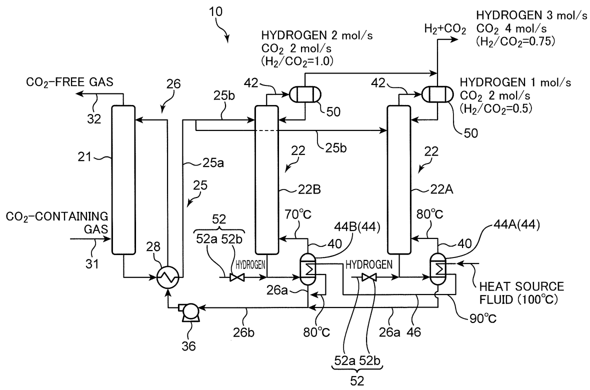


EP 4 548 999 A1

## Description

### Technical Field

The present invention relates to a gas treatment apparatus and a gas treatment method for separating an acidic compound.

### Background Art

Conventionally, there has been known a gas treatment apparatus that separates an acidic compound contained in a gas to be treated by bringing the acidic compound into contact with a treatment liquid. For example, a gas treatment apparatus disclosed in Patent Literature 1 described below includes an absorber and a regenerator. In the absorber, a gas to be treated and a treatment liquid are brought into contact with each other to absorb an acidic compound in the gas to be treated into the treatment liquid. On the other hand, in the regenerator, the treatment liquid absorbing the acidic compound is heated to separate the acidic compound from the treatment liquid. At the time of regeneration of the treatment liquid, a separation promoting gas for promoting separation of the acidic compound is introduced into the regenerator. As a result, the regeneration of the treatment liquid is promoted, and the regeneration temperature is lowered.

In the gas treatment apparatus disclosed in Patent Literature 1, the regeneration temperature is lowered, and the energy required for gas treatment is reduced. However, there is a demand for development of a technique capable of separating and recovering an acidic compound with less consumed energy.

### Citation List

### Patent Literature

Patent Literature 1: JP 6906766 B2

### Summary of Invention

An object of the present invention is to reduce energy required for separating and recovering an acidic compound.

A gas treatment apparatus according to the present invention includes: an absorber configured to bring a gas to be treated containing an acidic compound that generates an acid when dissolved in water and a treatment liquid into contact with each other to absorb the acidic compound contained in the gas to be treated into the treatment liquid; a plurality of regenerators configured to heat the treatment liquid having absorbed the acidic compound using heat of a heat source fluid to separate the acidic compound from the treatment liquid; and introduction means configured to introduce a separation promoting gas for promoting separation of the acidic compound from the treatment liquid into the plurality of regenerators. The plurality of regenerators are respectively provided with heaters that heat the treatment liquid by heat of the heat source fluid, and the heaters are connected in series so that the heat source fluid sequentially flows through the heaters. The introduction means is configured to introduce a larger amount of the separation promoting gas into a regenerator provided with a heater located farther downstream in a flow direction of the heat source fluid.

A gas treatment method according to the present invention includes: an absorption step of bringing a gas to be treated containing an acidic compound that generates an acid when dissolved in water and a treatment liquid into contact with each other to absorb the acidic compound contained in the gas to be treated into the treatment liquid; and a regeneration step of introducing the treatment liquid having absorbed the acidic compound into a plurality of regenerators, heating the treatment liquid using heat of a heat source fluid in each of the regenerators, and separating the acidic compound from the treatment liquid. Heaters are provided in the plurality of regenerators, respectively, and are connected in series. The regeneration step includes: a heating step of sequentially flowing the heat source fluid to the heaters to heat the treatment liquid in each of the regenerators; and an introduction step of introducing a separation promoting gas for promoting separation of the acidic compound from the treatment liquid into each of the regenerators. In the introduction step, a larger amount of the separation promoting gas is flowed into a regenerator provided with a heater located farther downstream in a flow direction of the heat source fluid.

### Brief Description of Drawings

FIG. 1 is a diagram schematically illustrating a configuration of a gas treatment apparatus according to an embodiment.

FIG. 2 is a graph illustrating a relationship between a ratio of the number of moles of carbon dioxide to the number of moles of hydrogen gas and a regeneration temperature.
FIG. 3 is a diagram schematically illustrating a configuration of a gas treatment apparatus as a comparative example.

## Description of Embodiment

An embodiment of the present invention will hereinafter be described in detail with reference to the drawings.
As illustrated in FIG. 1, a gas treatment apparatus 10 according to the embodiment is used for separating an acidic compound from a gas to be treated containing the acidic compound using a treatment liquid. The gas treatment apparatus 10 of the present embodiment is to treat carbon dioxide as an acidic compound. However, the acidic compound separated by the gas separation device 12 is not particularly limited as long as an aqueous solution becomes acidic, and examples thereof include carbon dioxide and a sulfur compound. Examples of the gas to be treated containing an acidic compound include industrial exhaust gas, process gas generated during purification, and natural gas.
The gas treatment apparatus 10 includes an absorber 21, a plurality of regenerators 22, a feed flow path 25, a return flow path 26, and a heat exchanger 28. The feed flow path 25 extracts the treatment liquid (rich liquid) from the absorber 21 and introduces the treatment liquid into the plurality of regenerators 22. The feed flow path 25 includes a main flow path 25a connected to the absorber 21, and a plurality of branch flow paths 25b that is connected to the main flow path 25a so as to branch from the main flow path 25a and is connected to the regenerators 22, respectively. That is, the plurality of regenerators 22 are connected in parallel to the absorber 21. The return flow path 26 extracts the treatment liquid (lean liquid) from each of the regenerators 22 and returns the treatment liquid to the absorber 21. The return flow path 26 includes a plurality of branch flow paths 26a connected to the regenerators 22, and a merging flow path 26b in which the plurality of branch flow paths 26a merge and which is connected to the absorber 21.
The heat exchanger 28 is connected to the feed flow path 25 and the return flow path 26, and causes heat exchange between the treatment liquid (rich liquid) flowing through the feed flow path 25 and the treatment liquid flowing through the return flow path 26 (lean liquid). Note that the heat exchanger 28 can be omitted.
The absorber 21 is connected with an inflow path 31 for taking in the gas to be treated, a gas discharge path 32 for discharging the gas after the treatment, the feed flow path 25, and the return flow path 26. The inflow path 31 is connected to a lower end portion of the absorber 21, and the gas discharge path 32 is connected to an upper end portion of the absorber 21. The main flow path 25a of the feed flow path 25 is connected to the lower end portion or the vicinity of the lower end portion of the absorber 21. That is, the feed flow path 25 is connected to a position where the treatment liquid accumulated in the absorber 21 can be extracted. The merging flow path 26b of the return flow path 26 is connected to the upper end portion or the vicinity of the upper end portion of the absorber 21. That is, the return flow path 26 is connected to a position where the treatment liquid recirculated from the regenerators 22 can flow down from above.
By bringing the gas to be treated and the treatment liquid into contact with each other, the absorber 21 causes the treatment liquid to absorb the acidic compound in the gas to be treated and discharges the gas from which the acidic compound has been removed. Note that the absorption of the acidic compound into the treatment liquid in the absorber 21 is an exothermic reaction. This reaction heat generated in the absorber 21 increases the temperatures of the gas to be treated and the treatment liquid.
Each of the branch flow paths 25b of the feed flow path 25 and each of the branch flow paths 26a of the return flow path 26 are connected to each regenerator 22. The branch flow path 25b of the feed flow path 25 is connected to a portion between the upper portion and the vicinity of the center of the regenerator 22. The branch flow path 26a of the return flow path 26 is connected to the lower end portion or the vicinity of the lower end portion of the regenerator 22. A pump 36 is provided on the merging flow path 26b of the return flow path 26.
Each regenerator 22 stores the treatment liquid that has absorbed the acidic compound, and heats the stored treatment liquid to desorb the acidic compound from the treatment liquid. The desorption of the acidic compound from the treatment liquid is an endothermic reaction. In each regenerator 22, when the treatment liquid is heated, not only the acidic compound is desorbed but also water in the treatment liquid is evaporated.
A heating flow path 40 and a supply path 42 are connected to each regenerator 22. The heating flow path 40 is provided with a heater 44 for heating the treatment liquid flowing out from the lower portion of the regenerator 22, and returns the heated treatment liquid to the lower portion in the regenerator 22. The heater 44 is configured to heat the treatment liquid flowing out of the regenerator 22 by heat of a heat source fluid. The heat source fluid is, for example, hot water of 100°C or lower, but a heat medium or water vapor may be used. Note that the heater 44 is not limited to a heater disposed in the heating flow path 40 as long as it is configured to heat the treatment liquid in the regenerator 22.
The heat source fluid is supplied to the heater 44 through a fluid flow path 46. The fluid flow path 46 is connected to each heater 44 so as to connect the heaters 44 in series. The fluid flow path 46 first supplies a heat source fluid supplied from a supply source (not illustrated) to the heater 44 on the right side in FIG. 1, and supplies the heat source fluid having passed through this heater 44 to the heater 44 on the left side in FIG. 1. In FIG. 1, the heater 44 provided in the regenerator 22 on the right side (first regenerator 22A) functions as a first heater 44A, and the heater 44 provided in the regenerator 22

on the left side (second regenerator 22B) functions as a second heater 44B. Therefore, the temperature of the heat source fluid passing through the second heater 44B is lower than the temperature of the heat source fluid passing through the first heater 44A.

The supply path 42 supplies the gas containing the acidic compound obtained in the regenerator 22 to a demand side. The supply path 42 is provided with a condenser 50 for cooling a mixed gas of a gas of the acidic compound evaporated from the treatment liquid and water vapor. When the mixed gas is cooled, the water vapor is condensed, so that the water vapor can be separated by the condenser 50. The separated water vapor is returned to the regenerator 22. As the condenser 50, a heat exchanger using inexpensive cooling water such as river water can be used. Note that the supply path 42 is configured to supply the gas flowing out of each regenerator 22 to the demand side after merging the gas, but instead of this, the gas flowing out of each regenerator 22 may be configured to be separately supplied to the demand side. This is effective in a case where a composition ratio of the gas regenerated by each regenerator 22 is different.

The gas treatment apparatus 10 is provided with introduction means 52 for supplying a gas (hereinafter, referred to as a separation promoting gas) for promoting separation of an acidic compound to each regenerator 22. The introduction means 52 includes a plurality of introduction paths 52a for sending the separation promoting gas to the plurality of regenerators 22, and a flow rate adjusting unit 52b for making a flow rate of the separation promoting gas supplied through each of the introduction paths 52a different. A downstream end of each introduction path 52a is connected to the lower end portion, the vicinity of the lower end portion, or the heating flow path 40 of the regenerator 22. Note that the plurality of introduction paths 52a are flow paths configured to branch from one gas supply source, but may be configured by separate flow paths connected to different gas supply sources.

The flow rate adjusting unit 52b can adjust the flow rate of each introduction path 52a to introduce a larger amount of the separation promoting gas into the regenerator 22 (second regenerator 22B) which is provided with the heater 44 (second heater 44B) located farther downstream in a flow direction of the heat source fluid in the heating flow path 40. The flow rate adjusting unit 52b may be configured by a flow rate adjusting valve disposed in each introducing path 52a. Note that the flow rate adjusting unit 52b is not limited to the flow rate adjusting valve disposed in each introduction path 52a, and may be configured by, for example, a distributor (not illustrated) provided at a portion where the introduction paths 52a merge.

In the gas treatment apparatus 10 illustrated in FIG. 1, the temperature of the heater 44 on the left side (second heater 44B) is lower than the temperature of heater 44 on the right side (first heater 44A). Therefore, the flow rate adjusting unit 52b adjusts the flow rate of each introduction path 52a so that the flow rate of the separation promoting gas supplied to the regenerator 22 on the left side (second regenerator 22B) is larger than the flow rate of the separation promoting gas supplied to the regenerator 22 on the right side (first regenerator 22A). That is, the second regenerator 22B having a relatively lower temperature is supplied with more separation promoting gas than the first regenerator 22A having a relatively higher temperature.

The separation promoting gas supplied to the regenerator 22 by the introduction means 52 is a gas that is hardly dissolved in the treatment liquid. That is, the separation promoting gas is hardly absorbed by the treatment liquid. Therefore, since the partial pressure of carbon dioxide in the regenerator 22 can be lowered by introducing the separation promoting gas into the regenerator 22, the separation of carbon dioxide from the treatment liquid is promoted. Examples of the separation promoting gas include hydrogen gas, oxygen gas, and hydrocarbon gases such as methane gas, and in the present embodiment, hydrogen gas is used. Note that, as the separation promoting gas, water vapor may be used instead of the gas that is hardly dissolved in the treatment liquid. The water vapor can be dissolved in the treatment liquid, but can lower the partial pressure of carbon dioxide.

In a case where the separation promoting gas is hardly dissolved in the treatment liquid, "hardly dissolved in the treatment liquid" may indicate that the solubility in the treatment liquid is a predetermined value or less. The separation promoting gas may be, for example, a gas that follows Henry's law and has a solubility of 1 mol or less in 100 g of the treatment liquid under the conditions of 0°C and 100 kPa. Note that the solubility of oxygen in water is $1.3 \times 10^{-4}$ mol/100g, the solubility of methane in water is $8 \times 10^{-4}$ mol/100g, and the solubility of hydrogen in water is $9.5 \times 10^{-5}$ mol/100g. On the other hand, since the solubility of ammonia in water is 6 mol/100g, ammonia does not correspond to the separation promoting gas.

In the present embodiment, an absorbent capable of reversibly absorbing and desorbing an acidic compound is used as a treatment liquid (absorbent) used in the gas treatment apparatus 10. The treatment liquid is, for example, an alkaline absorbent containing water, an amine compound, and an organic solvent. The amine compound may be 30 wt%, the organic solvent may be 60 wt%, and the water may be 10 wt%. The treatment liquid is preferably phase-separated by absorption of an acidic compound that is dissolved in water to generate an acid, but is not limited thereto. For example, the treatment liquid may be a treatment liquid prepared as an aqueous solution of an amine compound without using an organic solvent. Furthermore, the treatment liquid may be an amine compound, an organic solvent, an ionic liquid, a mixture thereof, an aqueous solution, or the like.

Examples of the amine compound include primary amines such as 2-aminoethanol (MEA: solubility parameter = 14.3 $(cal/cm^3)^{1/2}$) and 2-(2-aminoethoxy) ethanol (AEE: solubility parameter = 12.7 $(cal/cm^3)^{1/2}$), secondary amines such

as 2-(methylamino) ethanol (MAE), 2-(ethylamino) ethanol (EAE) and 2-(butylamino) ethanol (BAE), and tertiary amines such as triethanolamine (TEA), N-methyldiethanolamine (MDEA), tetramethylethylenediamine (TEMED), pentamethyldiethylenetriamine (PMDETA), hexamethyltriethylenetetramine and bis (2-dimethylaminoethyl) ether.

Examples of the organic solvent include 1-butanol (solubility parameter = 11.3 $(cal/cm^3)^{1/2}$), 1-pentanol (solubility parameter = 11.0 $(cal/cm^3)^{1/2}$), octanol, diethylene glycol diethyl ether (DEGDEE), and diethylene glycol dimethyl ether (DEGDME), and a plurality of them may be mixed and used.

In a case where the solubility parameter of each of the amine compound and the organic solvent falls within a predetermined range, the treatment liquid is two-phase separated into a phase having a high acidic compound content and a phase having a low acidic compound content due to absorption of the acidic compound. Here, the solubility parameter $\delta$ is represented by the following Formula (1).

[Mathematical formula 1]

$$\delta = \sqrt{(\Delta H - RT) / V} \quad \cdots (1)$$

$\Delta H$ is a molar evaporation latent heat, R is a gas constant, T is an absolute temperature, and V is a molar volume.

[Table 1]

| Difference between solubility parameters/ Two-phase separation ability | | | Organic solvent/ Solubility parameters $[(cal/cm^3)^{1/2}]$ | | |
|---|---|---|---|---|---|
| | | | 1-butanol | 1-pentanol | DEGDEE |
| | | | 11.3 | 11.0 | 8.2 |
| Amine compound/ Solubility parameters $[(cal/cm^3)^{1/2}]$ | MEA | 14.3 | 3.0<br>Good | 3.3<br>Good | 6.1<br>Not miscible |
| | AEE | 12.7 | 1.4<br>Good | 1.7<br>Good | 4.5<br>Not miscible |
| | MAE | 12.5 | 1.2<br>Good | 1.5<br>Good | 4.4<br>Not miscible |
| | EAE | 12.0 | 0.7<br>Not separated | | 3.8<br>Good |

As shown in Table 1, in the absorbent containing water, the amine compound, and the organic solvent, the combination of the amine compound and the organic solvent is selected such that a value obtained by subtracting the solubility parameter of the organic solvent from the solubility parameter of the amine compound is 1.1 $(cal/cm^3)^{1/2}$ or more and 4.2 $(cal/cm^3)^{1/2}$ or less, whereby the treatment liquid is two-phase separated into a phase having a higher acidic compound content and a phase having a lower acidic compound content due to absorption of the acidic compound. In a case where a value of the difference between the solubility parameters is less than the above-described lower limit value, the treatment liquid may not be separated into two phases even if the treatment liquid absorbs the acidic compound. On the other hand, in a case where the value of the difference between the solubility parameters exceeds the above described upper limit value, the treatment liquid separates into two phases before the treatment liquid absorbs the acidic compound and, in the step of bringing the treatment liquid into contact with the gas to be treated containing the acidic compound, a contact state between the treatment liquid and the gas to be treated becomes uneven, and absorption efficiency may decrease. Note that "good" in Table 1 means that the treatment liquid was a single liquid phase before absorption of carbon dioxide and was separated into two liquid phases by absorption of carbon dioxide. Furthermore, "not miscible" in Table 1 means that the treatment liquid was in a two-liquid phase state before absorption of carbon dioxide, and a single liquid phase was not formed. Furthermore, "not separated" in Table 1 means that the treatment liquid was a single liquid phase even after absorption of carbon dioxide.

It is desirable that the absorption condition in the absorber 21 is set to a region where a large amount of carbon dioxide is dissolved while the treatment liquid is separated into two phases, and the regeneration condition in the regenerator 22 is set to a region where the treatment liquid is not separated into two phases and carbon dioxide is not dissolved so much. That is, the absorption condition and the regeneration condition are adjusted by the partial pressure of carbon dioxide, the absorption temperature, and the regeneration temperature. This facilitates phase separation of the treatment liquid, so that a temperature difference between the regeneration temperature and the absorption temperature can be kept low. That is, it is possible to suppress the temperature difference between the regeneration temperature and the absorption temperature to be low because the equilibrium of the carbon dioxide absorption concentration is shifted due to the fact that the degree of absorption of carbon dioxide changes depending on the temperature and the ease of phase separation changes. In addition, since the separation promoting gas is supplied to the regenerator 22, the regeneration temperature can be suppressed to be lower.

Here, a gas treatment method using the gas treatment apparatus 10 according to the first embodiment will be described. The gas treatment method includes an absorption step and a regeneration step.

The absorption step is a step of bringing the gas to be treated and the treatment liquid into contact with each other in the absorber 21. The gas to be treated containing at least carbon dioxide is supplied to the absorber 21 through the inflow path 31. Furthermore, the treatment liquid (lean liquid) is introduced into the absorber 21 through the return flow path 26. The treatment liquid comes into contact with carbon dioxide contained in the gas to be treated and absorbs the carbon dioxide. In the absorber 21, the treatment liquid (rich liquid) that has absorbed carbon dioxide is stored. In a case where a treatment liquid that performs phase separation is used, the treatment liquid in contact with carbon dioxide is phase-separated into a first phase portion having a higher content of carbon dioxide and a second phase portion having a lower content of carbon dioxide separation.

The treatment liquid stored in the absorber 21 is sent to the regenerator 22 through the feed flow path 25. At this time, the treatment liquid flowing through the feed flow path 25 is heated by the treatment liquid flowing through the return flow path 26 in the heat exchanger 28, and is divided and introduced into each regenerator 22.

The regeneration step is a step of heating the treatment liquid introduced into the regenerator 22 and supplying a separation promoting gas to the regenerator 22 to separate carbon dioxide from the treatment liquid while promoting the separation of carbon dioxide.

Specifically, in the regeneration step, the heat source fluid is supplied to each heater 44 through the fluid flow path 46, and the heat source fluid sequentially flows to each heater 44 to heat the treatment liquid in each regenerator 22 (heating step). The heat source fluid supplied from a supply source (not illustrated) passes through the first heater 44A, and the heat source fluid that has passed through the first heater 44A passes through the second heater 44B. For example, in a case where the heat source fluid at 100°C is supplied from the supply source, the temperature is lowered from 100°C to 90°C by heating the treatment liquid in the first heater 44A, and the temperature is lowered from 90°C to 80°C by heating the treatment liquid in the second heater 44B. That is, 10°C of sensible heat is supplied to the treatment liquid in the first heater 44A, and 10°C of sensible heat is also supplied to the treatment liquid in the second heater 44B. Therefore, a total of 20°C of sensible heat can be used to heat the treatment liquid. In this case, the temperature of the treatment liquid returning from the first heater 44A to the first regenerator 22A is, for example, 80°C, and the temperature of the treatment liquid returning from the second heater 44B to the second regenerator 22B is, for example, 70°C. That is, each heater 44 is operated under a constraint condition that the temperature difference between the temperature of the heat source fluid flowing out and the temperature of the treatment liquid flowing out is 10°C.

In each regenerator 22, a separation promoting gas for promoting the separation of carbon dioxide from the treatment liquid is introduced (introduction step). At this time, the flow rate of each introduction path 52a is adjusted such

that the flow rate of the separation promoting gas supplied to the second regenerator 22B is larger than the flow rate of the separation promoting gas supplied to the first regenerator 22A. Therefore, even if the set temperature of the second regenerator 22B is lower than the set temperature of the first regenerator 22A, the same amount of carbon dioxide gas as that of the first regenerator 22A can be obtained in the second regenerator 22B. That is, when a larger amount of the separation promoting gas that is hardly dissolved in the treatment liquid is present in the regenerator 22, the partial pressure of the carbon dioxide gas in the regenerator 22 becomes lower, so that the carbon dioxide is easily expelled from the treatment liquid. That is, as illustrated in FIG. 2, the regeneration temperature decreases as a ratio of the number of moles of carbon dioxide to the number of moles of hydrogen gas increases. Therefore, even in a case where the temperature of the treatment liquid is low, it is possible to prevent the generation amount of the carbon dioxide gas from decreasing by increasing the flow rate of the separation promoting gas.

At this time, since the first regenerator 22A is set to 80°C, the molar ratio between the hydrogen gas and the carbon dioxide gas generated per unit time is about 1 : 2, and since the second regenerator 22B is set to 70°C, the molar ratio between the hydrogen gas and the carbon dioxide gas generated per unit time is about 2 : 2. Therefore, the first regenerator 22A and the second regenerator 22B have different gas composition ratios obtained. In this case, in the mixed gas in which the mixed gas supplied from the first regenerator 22A and the mixed gas supplied from the second regenerator 22B are mixed, the molar ratio of the hydrogen gas and the carbon dioxide gas generated per unit time is about 3 : 4.

When the treatment liquid is heated in each regenerator 22, water vapor evaporated from the treatment liquid may be obtained. The carbon dioxide and water vapor separated from the treatment liquid flow through the supply path 42. In the supply path 42, the water vapor is condensed in the condenser 50 and returned to the regenerator 22. The gas from which the water vapor is separated is supplied to the demand side. The treatment liquid stored in the regenerator 22 flows through the return flow path 26 and returns to the absorber 21.

Here, with reference to FIG. 3, a gas treatment apparatus provided with one regenerator 22 will be described as a comparative example. In the gas treatment apparatus as the comparative example, as illustrated in FIG. 3, one regenerator 22 is provided. In this apparatus, in a case where the heat source fluid at 100°C is supplied from the supply source to the heater 44, it is necessary to set the temperature of the treatment liquid heated by the heater 44 to about 75°C in order to set the molar ratio of the hydrogen gas and the carbon dioxide gas generated per unit time to about 3 : 4 as in the gas treatment apparatus 10 of FIG. 1. That is, in the 70°C setting, a mixed gas in which the molar ratio of hydrogen gas and carbon dioxide gas is about 2 : 2 is obtained, and in the 80°C setting, a mixed gas in which the molar ratio of hydrogen gas and carbon dioxide gas is about 1 : 2 is obtained. Therefore, in order to obtain a mixed gas in which the molar ratio is about 3 : 4, the set temperature of the heater 44 needs to be about 75°C. At this time, considering the same restriction as the heater 44 in FIG. 1, that is, the restriction that the temperature difference between the temperature of the heat source fluid flowing out and the temperature of the treatment liquid flowing out is 10°C in the heater 44, the temperature of the heat source fluid after passing through the heater 44 is controlled to 85°C. That is, in heater 44, sensible heat of 100°C - 85°C = 15°C is used. Therefore, heat utilization efficiency is lower in the gas treatment apparatus of FIG. 3 than in the gas treatment apparatus 10 of FIG. 1 in which 20°C of sensible heat can be used. From this, it can be seen that the thermal efficiency of the gas treatment apparatus 10 in FIG. 1 is improved as compared with the configuration in which one regenerator 22 is provided.

As described above, in the present embodiment, the heaters 44 respectively provided in the plurality of regenerators 22 are disposed in series in the fluid flow path 46, and the heat source fluid sequentially flows through the heaters 44. Therefore, the heat source fluid whose temperature has been lowered by being used to heat the treatment liquid in the first heater 44A corresponding to the first regenerator 22A is introduced into the second heater 44B corresponding to the second regenerator 22B. Therefore, in the second heater 44B, the temperature of the treatment liquid after being heated is lower than that in the first heater 44A. On the other hand, more separation promoting gas is introduced into the second regenerator 22B corresponding to the second heater 44B than the first regenerator 22A corresponding to the first heater 44A. Therefore, also in the second regenerator 22B in which the treatment liquid having a relatively low temperature exists, it is possible to perform an operation of separating an acidic compound in an amount equivalent to that of the first regenerator 22A from the treatment liquid. Moreover, since the heat source fluid sequentially flows through the heaters 44 along the fluid flow path 46, even if the treatment liquid is regenerated in the plurality of regenerators 22, it is not necessary to increase the amount of the heat source fluid flowing through the flow paths of the heat source fluid in proportion to the number of regenerators 22. As a result, an increase in the amount of heat input can be suppressed. Therefore, the utilization efficiency of heat can be increased as the entire gas treatment apparatus 10, and the energy required for the gas treatment can be reduced.

Note that it should be understood that the embodiment disclosed herein is illustrative in all respects and are not restrictive. The present invention is not limited to the above embodiment, and various modifications, improvements, and the like can be made without departing from the gist of the present invention. For example, in the gas treatment apparatus 10 of the above embodiment, the two regenerators 22 are provided, but three or more regenerators may be provided. Also in this case, it is sufficient that the heat source fluid sequentially flows through the heaters 44 along the fluid flow path 46, and the introduction means 52 is configured to introduce more separation promoting gas as the regenerator 22 is provided

with the heater 44 positioned on the downstream side in the flow direction of the heat source fluid.

Here, the above embodiment will be outlined.

(1) A gas treatment apparatus according to the embodiment includes: an absorber configured to bring a gas to be treated containing an acidic compound that generates an acid when dissolved in water and a treatment liquid into contact with each other to absorb the acidic compound contained in the gas to be treated into the treatment liquid; a plurality of regenerators configured to heat the treatment liquid having absorbed the acidic compound using heat of a heat source fluid to separate the acidic compound from the treatment liquid; and introduction means configured to introduce a separation promoting gas for promoting separation of the acidic compound from the treatment liquid into the plurality of regenerators. The plurality of regenerators are respectively provided with heaters that heat the treatment liquid by heat of the heat source fluid, and the heaters are connected in series so that the heat source fluid sequentially flows through the heaters. The introduction means is configured to introduce a larger amount of the separation promoting gas into a regenerator provided with a heater located farther downstream in a flow direction of the heat source fluid.

In the gas treatment apparatus, the heaters respectively provided in the plurality of regenerators are disposed in series in a flow path of the heat source fluid, and the heat source fluid sequentially flows through the heaters. Therefore, the heat source fluid whose temperature has been lowered by being used to heat the treatment liquid in the heater (first heater) corresponding to one regenerator (first regenerator) is introduced into the heater (second heater) corresponding to another regenerator (second regenerator). Therefore, in the second heater, the temperature of the treatment liquid after being heated is lower than that in the first heater. On the other hand, more separation promoting gas is introduced into the second regenerator corresponding to the second heater as compared with the first regenerator corresponding to the first heater. Therefore, even in the second regenerator in which the treatment liquid having a relatively low temperature is present, it is possible to perform an operation of separating an acidic compound in an amount equivalent to that of the first regenerator from the treatment liquid. In addition, since the heat source fluid sequentially flows through each of the heaters, even if the treatment liquid is regenerated in the plurality of regenerators, it is not necessary to increase an amount of the heat source fluid flowing through the flow path of the heat source fluid in proportion to the number of regenerators. As a result, an increase in the amount of heat input can be suppressed. Therefore, the utilization efficiency of heat can be increased as the entire gas treatment apparatus, and the energy required for the gas treatment can be reduced.

(2) The treatment liquid may include a treatment liquid that performs phase separation by absorption of the acidic compound, and in this case, the separation promoting gas may include water vapor or a gas that is hardly dissolved in the treatment liquid. In this aspect, in each of the regenerators, not only the separation promoting gas that is water vapor or a gas that is hardly dissolved in the treatment liquid is brought into contact with the treatment liquid, but also the acidic compound is separated from the treatment liquid in a state where a phase portion having a low acidic compound content is interposed therebetween. Therefore, the regeneration temperature at the time of separating the acidic compound can be further lowered. For example, by appropriately selecting the treatment liquid, the treatment liquid can be regenerated even at a temperature of 100°C or lower. Therefore, normal pressure hot water or pressurized hot water can also be employed as the heat source fluid. In the case of hot water, the temperature is lowered by heat exchange unlike steam, but since the temperature of the treatment liquid may also be low, there is an advantage that compatibility with the treatment liquid to be phase-separated is good, and heat is used up to a low temperature.

(3) The gas to be treated may include carbon dioxide gas, and the separation promoting gas may include hydrogen gas.

(4) The gas treatment method according to the embodiment includes: an absorption step of bringing a gas to be treated containing an acidic compound that generates an acid by being dissolved in water into contact with a treatment liquid to absorb the acidic compound contained in the gas to be treated into the treatment liquid; and a regeneration step of introducing the treatment liquid having absorbed the acidic compound into a plurality of regenerators, heating the treatment liquid using heat of a heat source fluid in each of the regenerators, and separating the acidic compound from the treatment liquid. Heaters are provided in the plurality of regenerators, respectively, and are connected in series. The regeneration step includes: a heating step of sequentially flowing the heat source fluid to the heaters to heat the treatment liquid in each of the regenerators; and an introduction step of introducing a separation promoting gas for promoting separation of the acidic compound from the treatment liquid into each of the regenerators. In the introduction step, a larger amount of the separation promoting gas is flowed into a regenerator provided with a heater located farther downstream in a flow direction of the heat source fluid.

In the gas treatment method, the heaters provided in the plurality of regenerators are disposed in series in a flow path of the heat source fluid, and the heat source fluid is sequentially flowed to the heaters in the heating step. Therefore, the heat source fluid whose temperature has been lowered by being used to heat the treatment liquid in the heater (first heater) corresponding to one regenerator (first regenerator) is introduced into the heater (second heater) corresponding to another regenerator (second regenerator). Therefore, in the second heater, the temperature of the treatment liquid after being heated is lower than that in the first heater. On the other hand, in the introduction step, more separation promoting gas is introduced into the second regenerator corresponding to the second heater as compared with the first regenerator corresponding to the first heater. Therefore, even in the second regenerator in which the treatment liquid having a relatively low temperature is present, it is possible to perform an operation of separating an acidic compound in an amount equivalent to that of the first regenerator from the treatment liquid. Moreover, in the heating step, since the heat source fluid sequentially flows to each of the heaters, even if the treatment liquid is regenerated in the plurality of regenerators, it is not necessary to increase a flow rate of the heat source fluid in proportion to the number of regenerators. Therefore, as a result, an increase in the amount of heat input can be suppressed, and the energy required for the gas treatment can be reduced.

(5) In the gas treatment method, the treatment liquid may include a treatment liquid that performs phase separation by absorption of the acidic compound, and in this case, the separation promoting gas may include water vapor or a gas that is hardly dissolved in the treatment liquid. In this aspect, in the regeneration step, not only the separation promoting gas that is a gas that is hardly dissolved in the treatment liquid or water vapor is brought into contact with the treatment liquid, but also the acidic compound is separated from the treatment liquid in a state where a phase portion having a low acidic compound content is interposed therebetween. Therefore, the regeneration temperature at the time of separating the acidic compound can be further lowered. For example, by appropriately selecting the treatment liquid, the treatment liquid can be regenerated even at a temperature of 100°C or lower. Therefore, normal pressure hot water or pressurized hot water can also be employed as the heat source fluid. In the case of hot water, the temperature is lowered by heat exchange unlike steam, but since the temperature of the treatment liquid may also be low, there is an advantage that compatibility with the treatment liquid to be phase-separated is good, and heat is used up to a low temperature.

(6) In the gas treatment method, the gas to be treated may include carbon dioxide gas, and the separation promoting gas may include hydrogen gas.

As described above, the energy required for separating and recovering the acidic compound can be reduced.

## Claims

1. gas treatment apparatus comprising:

   an absorber configured to bring a gas to be treated containing an acidic compound that generates an acid when dissolved in water and a treatment liquid into contact with each other to absorb the acidic compound contained in the gas to be treated into the treatment liquid;
   a plurality of regenerators configured to heat the treatment liquid having absorbed the acidic compound using heat of a heat source fluid to separate the acidic compound from the treatment liquid; and
   introduction means configured to introduce a separation promoting gas for promoting separation of the acidic compound from the treatment liquid into the plurality of regenerators,
   wherein the plurality of regenerators are respectively provided with heaters that heat the treatment liquid by heat of the heat source fluid, and the heaters are connected in series so that the heat source fluid sequentially flows through the heaters, and
   the introduction means is configured to introduce a larger amount of the separation promoting gas into a regenerator provided with a heater located farther downstream in a flow direction of the heat source fluid.

2. The gas treatment apparatus according to claim 1, wherein

   the treatment liquid includes a treatment liquid that performs phase separation by absorption of the acidic compound, and
   the separation promoting gas includes water vapor or a gas that is hardly dissolved in the treatment liquid.

3. The gas treatment apparatus according to claim 1 or 2, wherein the gas to be treated includes carbon dioxide gas, and the separation promoting gas includes hydrogen gas.

4. gas treatment method comprising:

   an absorption step of bringing a gas to be treated containing an acidic compound that generates an acid when dissolved in water and a treatment liquid into contact with each other to absorb the acidic compound contained in

the gas to be treated into the treatment liquid; and
a regeneration step of introducing the treatment liquid having absorbed the acidic compound into a plurality of regenerators, heating the treatment liquid using heat of a heat source fluid in each of the regenerators, and separating the acidic compound from the treatment liquid,
wherein heaters are provided in the plurality of regenerators, respectively, and are connected in series,
the regeneration step includes:

a heating step of sequentially flowing the heat source fluid to the heaters to heat the treatment liquid in each of the regenerators; and
an introduction step of introducing a separation promoting gas for promoting separation of the acidic compound from the treatment liquid into each of the regenerators, and
in the introduction step, a larger amount of the separation promoting gas is flowed into a regenerator provided with a heater located farther downstream in a flow direction of the heat source fluid.

**5.** The gas treatment method according to claim 4, wherein

the treatment liquid includes a treatment liquid that performs phase separation by absorption of the acidic compound, and
the separation promoting gas includes water vapor or a gas that is hardly dissolved in the treatment liquid.

**6.** The gas treatment method according to claim 4 or 5, wherein the gas to be treated includes carbon dioxide gas, and the separation promoting gas includes hydrogen gas.

FIG.1

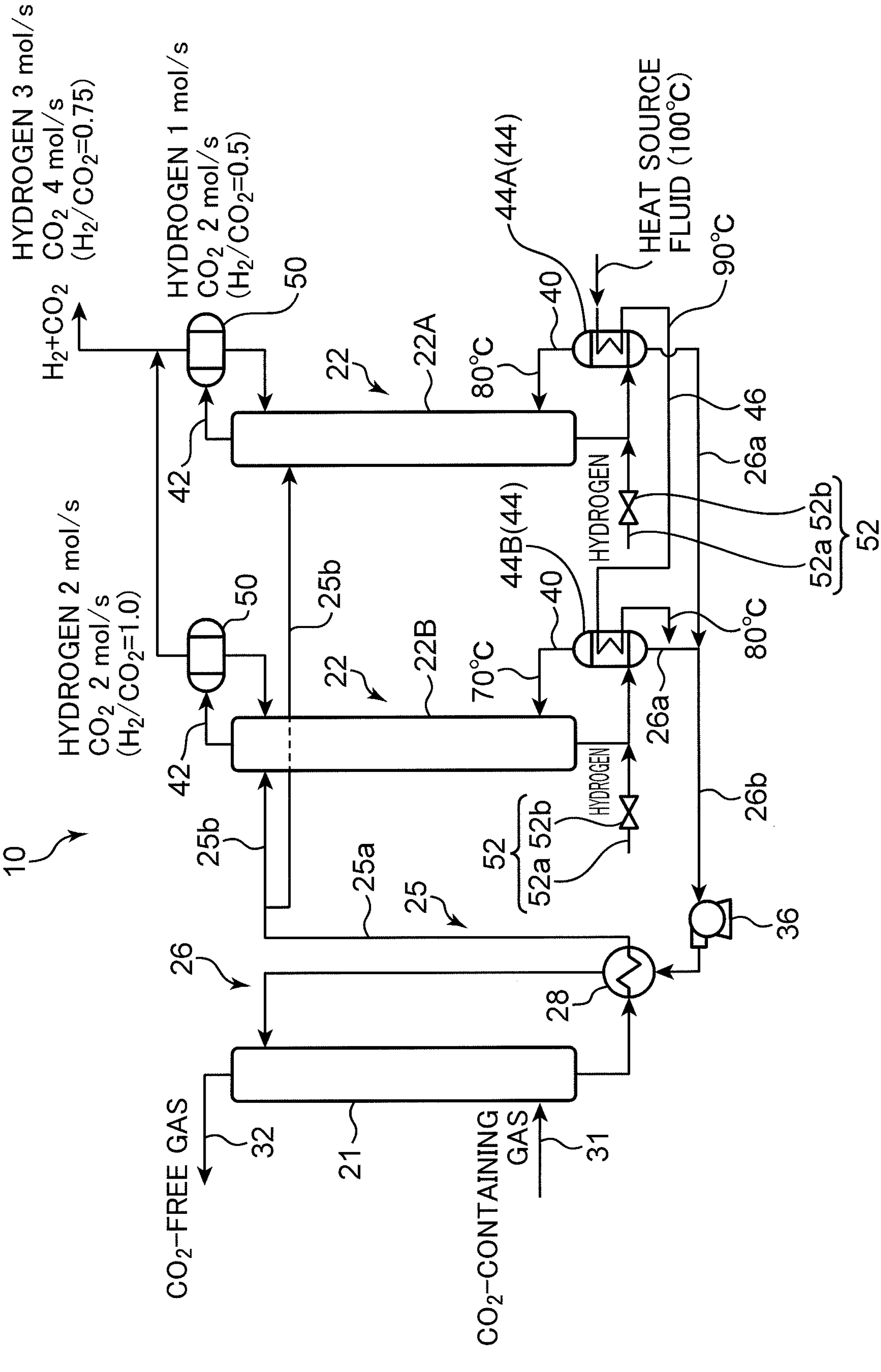
10
HYDROGEN 3 mol/s
$CO_2$ 4 mol/s
($H_2/CO_2$=0.75)
$H_2+CO_2$
HYDROGEN 1 mol/s
$CO_2$ 2 mol/s
($H_2/CO_2$=0.5)
HYDROGEN 2 mol/s
$CO_2$ 2 mol/s
($H_2/CO_2$=1.0)
50
42
22
22A
22B
80°C
70°C
40
44A(44)
44B(44)
HEAT SOURCE FLUID (100°C)
90°C
46
26a
80°C
HYDROGEN
52a 52b
52
25b
25a
25
26
26b
28
36
21
32
31
$CO_2$-FREE GAS
$CO_2$-CONTAINING GAS

FIG.2

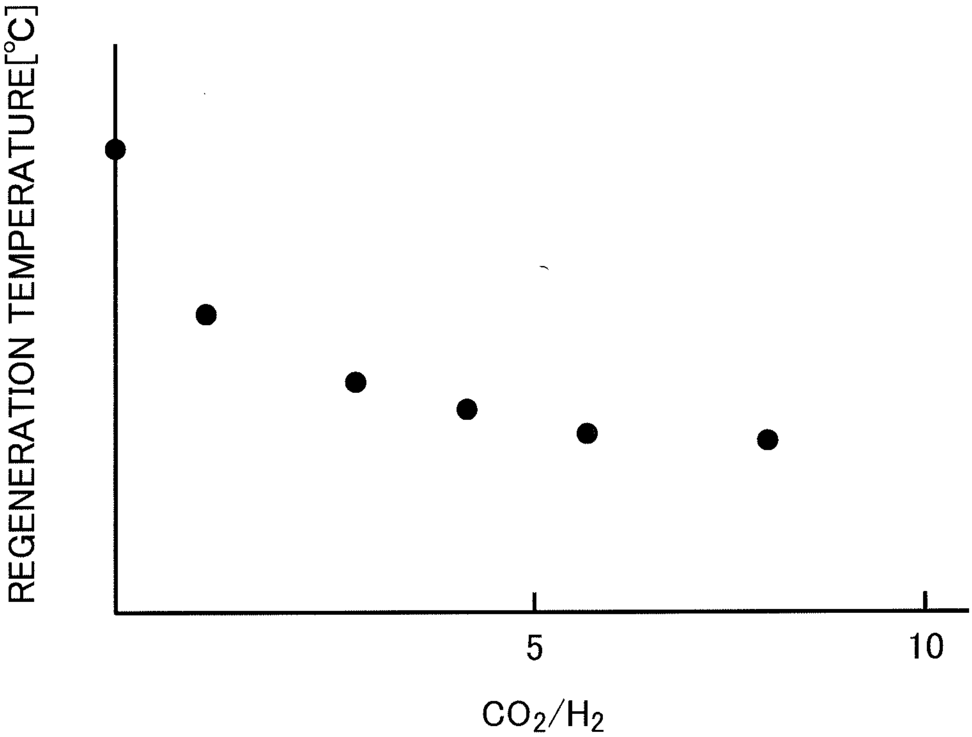

FIG.3

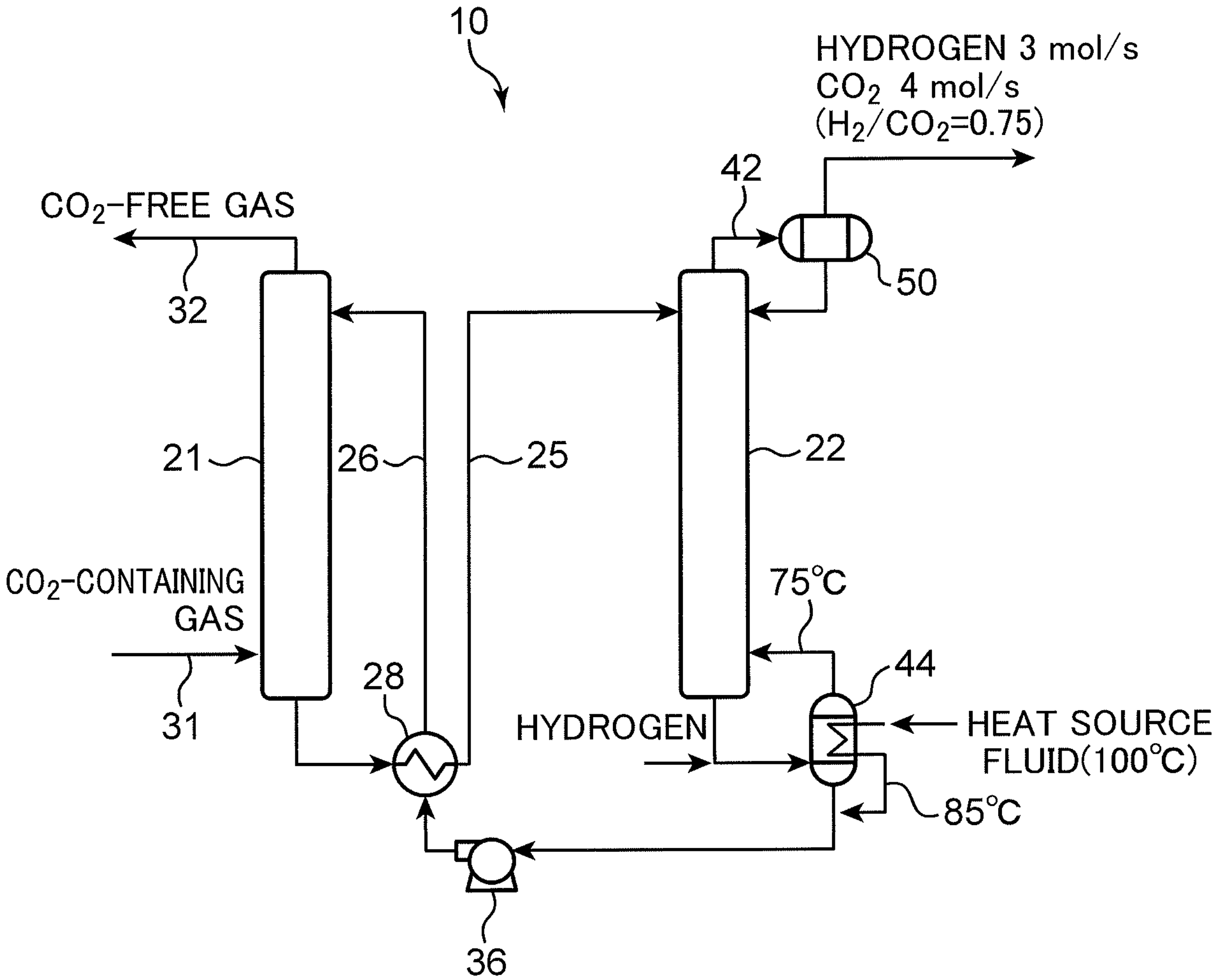
10
HYDROGEN 3 mol/s
$CO_2$ 4 mol/s
($H_2/CO_2$=0.75)
42
$CO_2$-FREE GAS
50
32
21
26
25
22
$CO_2$-CONTAINING GAS
75℃
44
31
28
HYDROGEN
HEAT SOURCE FLUID(100℃)
85℃
36

**INTERNATIONAL SEARCH REPORT**

International application No.
**PCT/JP2023/025013**

**A. CLASSIFICATION OF SUBJECT MATTER**

***B01D 53/14***(2006.01)i; ***B01D 53/62***(2006.01)i; ***B01D 53/78***(2006.01)i
FI: B01D53/14 220; B01D53/78; B01D53/62 ZAB

According to International Patent Classification (IPC) or to both national classification and IPC

**B. FIELDS SEARCHED**

Minimum documentation searched (classification system followed by classification symbols)

B01D53/14-53/18; B01D53/34-53/73;53/74-53/85;53/92-53/92,370;53/96; F23J13/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6906766 B2 (KOBE STEEL LTD) 21 July 2021 (2021-07-21)<br>entire text, all drawings | 1-6 |
| A | JP 2021-115553 A (KOBE STEEL LTD) 10 August 2021 (2021-08-10)<br>paragraphs [0075]-[0109], fig. 3 | 1-6 |
| A | JP 2019-181367 A (IHI CORP) 24 October 2019 (2019-10-24)<br>paragraphs [0051]-[0058], fig. 4 | 1-6 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/025013**

| Patent document cited in search report | Publication date (day/month/year) | Patent family member(s) | Publication date (day/month/year) |
|---|---|---|---|
| JP 6906766 B2 | 21 July 2021 | US 2021/0016226 A1<br>entire text, all drawings<br>WO 2019/107136 A1<br>EP 3702015 A1<br>CN 111372671 A | |
| JP 2021-115553 A | 10 August 2021 | WO 2021/152882 A1<br>paragraphs [0050]-[0084], fig. 3 | |
| JP 2019-181367 A | 24 October 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6906766 B